# FASCICULE DE BREVET EUROPEEN

(11) **EP 2 811 358 B1**
(45) Date de publication et mention de la délivrance du brevet: **22.11.2017**
(21) Numéro de dépôt: 14001499.4
(22) Date de dépôt: 28.04.2014
(51) Int. Cl.: G05D 1/06, G01C 23/00, G01S 13/93

(54) **Procédé d'approche d'une plateforme**
Annäherungsverfahren einer Plattform
Method for approaching a platform

(30) Priorité: 05.06.2013 FR 1301272
(43) Date de publication de la demande: 10.12.2014
(73) Titulaire: Airbus Helicopters, 13725 Marignane Cedex (FR)
(72) Inventeur: Canale, Nicolas, 13006 Marseille (FR); Iraudo, Lionel, 13760 Saint Cannat (FR)
(74) Mandataire: GPI & Associés

(56) Documents cités:
- EP-A2- 2 249 126
- WO-A2-2010/077531
- FR-A1- 2 943 778
- GB-A- 2 492 665
- "Advisory Circular AC No: 90-80B: Approval of Offshore Standard Approach Procedures, Airborne Radar Approaches, and Helicopter En Route Descent Areas", , 12 avril 1999 (1999-04-12), XP55097872, Extrait de l'Internet: URL:http://www.faa.gov/documentLibrary/med ia/Advisory_Circular/AC90-80B.pdf [extrait le 2014-01-22]

## Description

La présente invention concerne un procédé pour conduire un aéronef sur une plateforme, et notamment un aéronef à atterrissage court tel qu'un aéronef muni d'une voilure tournante par exemple.

L'invention se situe donc dans le domaine technique des systèmes d'assistance au pilotage d'un aéronef, et notamment des systèmes automatisés d'aide à l'approche de plateformes pour giravion.

En effet, un aéronef à voilure tournante doit pouvoir trouver et approcher en sécurité des plateformes ou vaisseaux mobiles, indépendamment des conditions météorologiques et de visibilité et en évitant les d'obstacles présents dans la zone d'approche.

L'approche est conduite en tenant compte de la direction et de la vitesse du vent dans le secteur, du type de plateforme à approcher (plateformes fixes, mobiles, bateaux ou barges), des obstacles environnants (grues, barges, bateaux servant au positionnement de la plateforme, bateaux type porte containers ou « super tanker » naviguant autour de la zone d'approche, ou autres plateformes environnantes), du confort des passagers.

Les approches de plateformes sont généralement constituées des segments de vol suivants.

Ainsi, l'approche comporte un segment d'arrivée qui relie le dernier point de vol de la phase de vol en cours et un point initial d'approche connu sous l'acronyme « IAF » soit « Initial Approach Fix » en langue anglaise. Ce segment d'arrivée est généralement positionné à une altitude de 1500 ft. On rappelle que le symbole « ft » fait référence à l'unité de longueur dénommée « feet » en langue anglaise valant 30.48 centimètres.

Un segment d'approche initiale peut relier le point initial d'approche IAF à un point intermédiaire connu sous l'acronyme IF soit « Intermediate Fix » en langue anglaise. Ce segment d'approche initiale vise à permettre à l'aéronef de décélérer et de s'aligner sur la trajectoire à suivre.

Un segment d'approche intermédiaire peut relier le point intermédiaire IF à un point d'approche final connu sous l'acronyme « FAF » soit « Final Approach Fix » en langue anglaise pour descendre à une altitude allant jusqu'à 1000 ft. Ce segment a pour but d'aligner l'appareil, de décélérer et de préparer le segment d'approche finale.

Au moins un segment d'approche finale relie le point d'approche final FAF et un point de décision connu sous l'acronyme « MAP » soit « Missed Approach point » en langue anglais.

Par exemple, on relie le point d'approche final FAF au point de décision MAP en passant par un point de palier LPO et un point de décalage OIP.

Si un pilote établit un contact visuel avec la plateforme au point de décision, le pilote peut poser l'aéronef sur cette plateforme.

Par contre, un segment dit de remise des gaz doit être conduit si le contact visuel avec la plateforme n'est pas obtenu à ce stade de l'approche. Ce segment de remise des gaz peut par ailleurs être conduit à n'importe quel moment de l'approche si l'équipage le juge utile. L'objet de ce segment de remise des gaz est de rejoindre une altitude de sécurité.

La descente finale allant du point d'approche final au point de décision MAP ne doit notamment être réalisée qu'en l'absence d'obstacle dans un couloir de 2 nm. On rappelle que le symbole « nm » fait référence à l'unité de longueur dénommée « mille nautique» en langue anglaise valant 1852 mètres.

Si des obstacles sont présents dans ce couloir, la procédure d'approche peut être annulée par sécurité. La détection de tels obstacles peut être délicate. En effet, un équipage peut avoir des difficultés pour évaluer si la présence d'un navire en mouvement est susceptible de mettre fin à la procédure d'approche.

Les documents suivants présentent des approches connues de plateformes :
- le document AC90-80B « Approval of Offshore Standard Approach Procedures, Airborne Radar Approaches, and Helicopter En Route Descent Areas » publié le 12.04.99
- le document JAR OPS 3, Section 2, Subpart E IEM to Appendix 1 to JAR-OPS 3.430 sub-paragraph (d) (amendement 2, publié le 01.01.02).
- le document EU-OPS COMMISSION REGULATION (EU) No 965/2012 of 5 October 2012 (AMC1 CAT.OP.MPA.120 and GM1 CAT.OP.MPA.120),
- le document CAA paper 2010/01 "The SBAS Offshore Approach Procedure (SOAP)".

Lorsque les conditions météorologiques sont défavorables, une approche aux instruments est propice au stress de l'équipage qui doit piloter manuellement l'aéronef pour le guider vers une zone où l'acquisition visuelle de la plateforme sera obtenue.

Dans la transition entre la phase de vol aux instruments et la phase de vol visuelle, l'attention de l'équipage doit basculer en permanence entre ce qui est affiché sur les écrans de pilotage du tableau de bord, et ce qu'il observe à l'extérieur pour détecter un quelconque signe/indice visuel permettant de confirmer la position de la plateforme (lumière, relief). Cette façon d'approcher sur plateforme n'est donc pas la plus pratique et peut quelquefois créer des erreurs d'interprétation en cas par exemple de brouillard faisant perdre temporairement l'acquisition visuelle de la cible d'atterrissage.

Les approches aux instruments vers une plateforme ou vaisseaux mobiles sont jusqu'à présent conduites sans l'utilisation d'un calculateur de navigation, connu sous l'acronyme « FMS » soit « Flight Management System » en langue anglaise, et sans couplage au pilote automatique de l'aéronef sur une trajectoire d'approche prédéfinie par le FMS.

Certaines plateformes sont aujourd'hui équipées d'un dispositif, connu sous l'acronyme « NDB » soit « Non Directional Beacon » en langue anglaise, utilisé par l'équipage via le calculateur de navigation comme moyen d'aide à la navigation et de corrélation de la position de l'appareil avec une précision relative mais ce moyen ne permet pas la construction d'un plan de vol d'approche.

On connaît un calculateur de navigation utilisé pour fournir un guidage horizontal lors de la phase en route. Pour la phase d'approche, l'équipage détermine un point cible hors route correspondant aux coordonnées de la plateforme à atteindre comme moyen d'aide à la navigation. Cependant, le calculateur de navigation ne segmente pas les différentes phases de l'approche vers la plateforme pour asservir le pilote automatique sur ces données de guidage (déviation horizontale, déviation verticale, consigne de vitesse).

L'approche est alors conduite manuellement ou semi automatiquement via l'assistance de certains modes supérieurs du pilote automatique en utilisant les cartes d'approche publiées par les opérateurs et approuvées par les autorités locales.

Le radar météo de l'aéronef peut en outre être utilisé comme moyen d'identification de la plateforme, de détection et d'évitement d'obstacle transitoire ou fixe au cours de l'approche et de la descente finale.

Le document US 2010/0168939 propose un module et un procédé automatisé d'approche d'une plateforme sur une trajectoire d'approche construite à partir de points d'approche.

Selon ce document US 2010/0168939, un pilote saisit dans un module de l'aéronef :
- les coordonnées de la plateforme cible à atteindre,
- un cap d'approche finale vers la plateforme,
- une distance de décalage séparant latéralement la trajectoire à suivre d'une trajectoire dirigée vers la plateforme suivant ce cap d'approche,
- une hauteur de descente.

Dès lors, le module de l'aéronef détermine notamment la position du point initial d'approche IAF et du point d'approche final FAF en réponse aux données saisies. L'aéronef est alors dirigé vers le point initial d'approche.

Ainsi, la trajectoire d'approche construite comporte un segment horizontal reliant un point initial d'approche IAF à un point d'approche final FAF.

Ensuite, la trajectoire comprend un segment de descente puis un segment en palier pour relier le point d'approche final FAF à un point de décision MAP.

Le point initial d'approche IAF, le point d'approche final FAF et le point de décision MAP sont contenus dans un plan vertical parallèle au cap d'approche choisi. On comprend que l'on appelle par « plan vertical » un plan dirigé selon la pesanteur, des points de ce plan vertical pouvant se trouver à des altitudes différentes.

Ce plan vertical est décalé par rapport à la plateforme d'une distance égale à la distance de décalage saisie.

Le document US7016772 B2 dévoile un dispositif de visualisation d'informations sur des véhicules en fonction de leur importance (dimension, position, vitesse), et dévoile un système pour navire qui combine des informations radar avec des informations provenant d'un système automatique d'identification connu sous l'acronyme « AIS » soit « Automatic Identification System » en langue anglaise.

Le document US8296001 B1 dévoile un système qui assiste un navigateur en donnant les caractéristiques d'autres bateaux et des informations côtières. Un radar ou un système AIS peuvent être utilisés.

Le document JP3763004 B1 décrit un système pour protéger un plan de descente en approche d'aéronefs vers un aéroport vis-à-vis de navires à l'aide d'un système AIS.

L'arrière plan technologique inclut aussi les documents suivants :
- Esterline CMC electronics, CMA-9000 flight management system operator's manual, operational program S/W 169-614876-022, publication N°9000-GEN-0105, itel N). 930-6000088-00, august 21.2008
- N.McFarlane, A new procedure for North Sea Helicopter Operations, Second GIANT use forum, Brussels, Belgium, October 9, 2008,
- K.M Dodson and J.R.A. Stevens, A North Sea trial to investigate the use of Differential GPS for instrument Approaches to Offshore Platforms, paper presented at the 23rd European Rotorcraft Forum, Dresden, Germany, September 1997,
- Les documents EP 2249126, GB 2492665, FR2943778.

La présente invention a alors pour objet de proposer un procédé d'approche visant à aider un équipage à atterrir sur une plateforme avec un aéronef.

Selon l'invention, définie par les revendications, un procédé pour faciliter l'approche d'une plateforme présente sur une surface liquide avec un aéronef comprend une phase d'élaboration pour élaborer une trajectoire d'approche vers une position théorique de ladite plateforme.

De plus, ce procédé comporte une phase de consolidation et peut comporter une phase de sécurisation.

Durant la phase de consolidation de ladite trajectoire d'approche :
∘ on détermine la position courante de ladite plateforme,
∘ on détermine une distance séparant ladite position théorique de ladite position courante,
∘ on déclenche une alerte lorsque ladite distance est supérieure à un premier seuil,

Durant la phase de sécurisation de ladite trajectoire d'approche :
∘ on détermine au fil du temps la position actuelle ainsi que la direction de déplacement et la vitesse de déplacement des objets munis d'un système automatique d'identification qui sont présents dans une zone de surveillance prédéterminée,
∘ on détermine un niveau de dangerosité de chaque objet par rapport à la trajectoire d'approche suivie,
∘ on affiche sur un écran de visualisation une représentation horizontale de ladite trajectoire d'approche, ainsi que pour chaque objet : un plot représentant la position actuelle de l'objet, une indication du sens de déplacement de l'objet, et une représentation relative au niveau de dangerosité de l'objet.

Les objets surveillés peuvent être des objets flottants et/ou des objets volants.

La phase d'élaboration peut être entreprise automatiquement par un calculateur de navigation, à partir de données d'entrée comprenant notamment la position théorique de la plateforme et une course d'approche telle qu'un cap à suivre par exemple. On se référera à la littérature sur les procédures d'approche pouvant être générées.

La position théorique peut être saisie par un opérateur, ou encore peut provenir d'une base de données de plateformes. Cette base de données comporte par exemple un identifiant de la plateforme et ces coordonnées. D'autres informations sont éventuellement présentent, tel qu'un rayon de chaque plateforme notamment en considérant que chaque plateforme est contenu dans un cercle.

La phase de consolidation propose de comparer la position théorique d'une plateforme cible ayant permis d'établir la trajectoire d'approche à une position courante de cette plateforme cible. Ainsi, un signal radar ou encore un signal connu sous l'acronyme AIS faisant référence à un système automatique d'identification permet d'obtenir une position courante « mesurée » de la plateforme cible.

Si la distance séparant la position théorique de la position courante est inférieure à un premier seuil, on considère que les coordonnées de la position théorique sont exactes. Le premier seuil peut être de l'ordre de 0.1 Nm.

Par contre, dans la négative, on génère une alarme pour prévenir l'équipage et lui signaler un éventuel problème. On verra par la suite que l'équipage peut alors se dérouter ou encore peut recaler la trajectoire d'approche sur une nouvelle position de la plateforme, la position courante par exemple.

On comprend que l'aéronef effectue des mesures selon une fréquence donnée. Par exemple, l'aéronef peut relever des positions transmises par des systèmes automatiques d'identification toutes les 6 secondes durant un vol d'avancement.

Dès lors, on peut générer une alerte seulement si une pluralité de mesures confirme le décalage présent entre la position théorique et la position courante mesurée.

La phase de consolidation peut être réalisée automatiquement et en temps réel par un calculateur, tel qu'un calculateur cartographique connu sous l'acronyme DMAP communiquant avec le calculateur de navigation.

Cette phase de consolidation permet de sécuriser favorablement l'approche.

Par ailleurs, ce procédé peut mettre en oeuvre une phase de sécurisation. Certains règlements imposent à l'aéronef de suivre une trajectoire d'approche présente dans un couloir d'approche de 2 nm de large centré sur cette trajectoire d'approche, ce couloir d'approche ne devant pas contenir d'obstacle.

Il peut être délicat de vérifier ce point durant un vol aux instruments dans des conditions atmosphériques difficiles en utilisant seulement le radar météo comme moyen primaire d'identification et de détection d'obstacle. La phase de sécurisation tente d'y remédier pour les obstacles comprenant des systèmes automatiques d'identification.

Ces systèmes automatiques d'identification transmettent des informations à l'aéronef relatives à l'obstacle, telles que sa position et son vecteur vitesse. A l'aide de ces informations, on détermine la dangerosité de l'obstacle en déterminant les risques de conflit entre la trajectoire de l'aéronef et la trajectoire de l'obstacle. Cette opération est par exemple réalisée pour chaque obstacle présent dans la zone de surveillance considérée. Dès lors, on affiche sur un écran de visualisation la trajectoire d'approche suivie par l'aéronef, ainsi que des identifiants permettant visuellement de déterminer la position d'un obstacle, le mouvement effectué par cet obstacle, la dangerosité de l'obstacle par rapport à la trajectoire d'approche calculée voire la position prédictive de l'obstacle à l'issue d'un temps donné.

A l'aide des ces informations, un membre d'équipage de l'aéronef peut établir une trajectoire d'approche alternative si un obstacle risque d'être présent dans le couloir d'approche actuel. L'aéronef peut aussi se dérouter si nécessaire.

Ce procédé peut de plus comporter une ou plusieurs des caractéristiques additionnelles qui suivent.

Ainsi, durant la phase de consolidation et si la distance séparant la position théorique de la position courante est inférieure à un deuxième seuil on peut modifier manuellement la position théorique de la plateforme. Le deuxième seuil peut être supérieur au premier seuil.

Par exemple, on modifie la position théorique de la plateforme pour minimiser la distance la séparant de la position courante relevée, en la faisant coïncider avec la position courante éventuellement. La nouvelle position théorique est alors utilisée pour établir la trajectoire d'approche, par un calculateur de navigation par exemple.

Par exemple, on peut choisir une nouvelle position théorique à l'aide d'un curseur affiché sur l'écran de visualisation, tel qu'une croix de saint André par exemple. Ce curseur peut pointer la position courante affichée sur cet écran de visualisation par exemple. On pourra également rentrer une distance et un axe sur un calculateur de navigation pour venir recaler la position théorique de la plateforme. Enfin, on pourra utiliser un système automatique d'identification AIS de la plateforme pour recaler la position théorique de la plateforme sur ses coordonnées AIS.

On note que le recalage de la plateforme n'est autorisé que si la distance déterminée est inférieure au deuxième seuil, de l'ordre de 0.3 nm par exemple. Cette caractéristique vise à éviter un recalage hasardeux en cas de différence trop importante entre la position théorique et la position courante.

A titre de variante, on peut autoriser le recalage indépendamment de la valeur de cette distance.

Ce recalage peut induire un calcul automatique d'une nouvelle trajectoire d'approche.

Ainsi, on détermine automatiquement un vecteur reliant la position théorique de la plateforme à une nouvelle position cible, et on décale automatiquement la trajectoire d'approche en lui appliquant ce vecteur pour rallier ladite nouvelle position.

Le recalage peut être interdit s'il intervient trop tardivement dans la procédure d'approche. Le constructeur peut déterminer un point d'approche à partir duquel le recalage est interdit.

Par ailleurs, on peut débuter la phase de consolidation dès réception d'une information fournissant la position courante de la plateforme. Par exemple, la phase de consolidation débute quand l'aéronef reçoit des informations provenant d'un système automatique d'identification de la plateforme.

En outre, la zone de surveillance prédéterminée est éventuellement un cercle d'un rayon défini par le constructeur centré sur la plateforme à atteindre.

Ce rayon peut correspondre à la longueur séparant un point initial d'approche IAF de la plateforme cible plus une constante, de l'ordre de 0.5 nm par exemple.

En outre, on peut afficher sur l'écran de visualisation un couloir d'approche d'une largeur donnée centré sur ladite trajectoire d'approche. La largeur peut être de 2 nm conformément à certaines réglementations. Le couloir d'approche peut alors être le couloir d'approche décrit dans ces réglementations, éventuellement prolongé localement par sécurité.

Par ailleurs, la trajectoire d'approche peut comporter un point d'approche finale FAF
Dès lors, durant la phase de sécurisation, la trajectoire d'approche passant par un point d'approche finale FAF, avant que ce point d'approche finale FAF soit atteint par l'aéronef :
- on détermine le temps nécessaire audit aéronef pour atteindre ce point d'approche finale FAF,
- on détermine la position prédictive qu'aura chacun desdits objets lorsque ledit aéronef aura atteint le point d'approche finale,
- on détermine le niveau de dangerosité de chaque objet en fonction de sa position prédictive et de sa position actuelle par rapport à un couloir d'approche d'une largeur donnée centré sur ladite trajectoire d'approche.

Par exemple, on met en oeuvre un premier, un deuxième et un troisième niveaux de dangerosité, un objet étant associé :
- au premier niveau de dangerosité lorsque la position actuelle de cet objet n'est pas située dans ledit couloir d'approche et lorsque sa position prédictive ne sera pas située dans ledit couloir d'approche lorsque ledit aéronef aura atteint le point d'approche finale,
- au deuxième niveau de dangerosité lorsque la position actuelle de cet objet n'est pas située dans ledit couloir d'approche et lorsque sa position prédictive sera située dans ledit couloir d'approche lorsque ledit aéronef aura atteint le point d'approche finale,
- au troisième niveau de dangerosité lorsque la position actuelle de cet objet est située dans ledit couloir d'approche et lorsque sa position prédictive sera située dans ledit couloir d'approche lorsque ledit aéronef aura atteint le point d'approche finale

Si un objet présente le premier, le deuxième, ou le troisième niveau de dangerosité, on affiche respectivement une première, une deuxième ou une troisième représentation. Par exemple, chaque représentation correspond à la couleur du plot. Un plot coloré en blanc peut signaler un objet non dangereux présentant le premier niveau de dangerosité, un plot hachuré ou coloré en ambre peut signaler un objet possiblement dangereux présentant le deuxième niveau de dangerosité, et un plot colorié en rouge ou en noir peut signaler un objet dangereux présentant le troisième niveau de dangerosité.

Par ailleurs, en fonction des objets détectés, on peut autoriser un changement de course de ladite trajectoire d'approche lors d'une phase d'élaboration d'une trajectoire d'approche alternative.

En présence d'objets dangereux par exemple, un opérateur élabore une trajectoire d'approche alternative en choisissant une nouvelle course d'approche. Si la trajectoire d'approche présente un segment décalé vers la droite de la plateforme par rapport à un segment initial, l'opérateur peut aussi choisir un décalage vers la gauche de cette plateforme, et inversement.

On peut afficher la trajectoire d'approche élaborée en premier lieu et la trajectoire d'approche alternative sur l'écran de visualisation avec des représentations distinctes pour faciliter l'élaboration de la trajectoire d'approche alternative.

Par exemple, la trajectoire d'approche courante est affichée en trait plein, et la trajectoire d'approche alternative en pointillés. Le couloir d'approche alternatif peut aussi être affiché.

En outre, durant la phase de sécurisation, la trajectoire d'approche passant par un point d'approche finale FAF, après que ce point d'approche finale FAF soit atteint :
- on détermine au fil du temps la position actuelle ainsi que la position prédictive basée sur la direction de déplacement et la vitesse de déplacement des objets dénommés « intrus » situés devant ledit aéronef ou dans un cercle centré sur ledit aéronef et présentant un diamètre prédéterminé,
- pour chaque intrus et au fil du temps :
   ∘ on détermine si ledit intrus est à un instant courant situé dans un couloir d'approche entourant ladite trajectoire d'approche et si ledit intrus est situé devant l'aéronef,
   ∘ si ledit intrus n'est pas présent dans le couloir d'approche et si ledit intrus est situé devant l'aéronef, on détermine si l'intrus va entrer dans ledit couloir d'approche dans le futur, et dans l'affirmative, quand ledit intrus entrera dans le couloir d'approche,
   ∘ on associe ledit intrus à un premier niveau de dangerosité représenté par une première représentation sur l'écran de visualisation lorsque ledit intrus est derrière l'aéronef à un instant courant ou lorsque ledit intrus sera derrière l'aéronef lorsqu'il entrera dans ledit couloir d'approche,
   ∘ on associe ledit intrus à un deuxième niveau de dangerosité représenté par une deuxième représentation sur l'écran de visualisation lorsque ledit intrus sera devant l'aéronef quand il entrera dans ledit couloir d'approche,
   ∘ on associe ledit intrus à un troisième niveau de dangerosité représenté par une troisième représentation sur l'écran de visualisation lorsque ledit intrus est devant l'aéronef dans ledit couloir d'approche à l'instant courant.

Normalement, aucun obstacle ne doit se trouver dans le couloir d'approche à ce stade. Cependant, un navire ou un aéronef peut éventuellement avoir changé de cap, et ce procédé peut permettre d'estimer un danger non prévu initialement.

Cette procédure permet de quantifier les éventuels risques liés à de tels obstacles.

En outre, selon une variante :
- on affiche sur l'écran de visualisation une boîte mobile représentant un quadrilatère d'une largeur fixe prédéterminée et d'une longueur égale au produit d'une constante de temps et de la vitesse sol de l'aéronef, la boîte mobile étant centrée transversalement sur le vecteur vitesse de l'aéronef et s'étendant longitudinalement à partir d'une représentation de l'aéronef,
- on détermine au fil du temps la position actuelle ainsi que la direction de déplacement la vitesse de déplacement et la localisation prédictive à l'issue de ladite constante de temps des objets dénommés « élément rapproché » situés sur ladite surface liquide munis d'un système automatique d'identification qui sont présents dans une zone de balayage prédéterminée centrée sur ledit aéronef,

- on affiche sur l'écran de visualisation pour chaque élément rapproché :
   ∘ une première symbologie lorsque la position actuelle et la localisation prédictive ne sont pas situées dans la boîte mobile,
   ∘ une deuxième symbologie lorsque la position actuelle n'est pas située dans la boîte mobile et lorsque la localisation prédictive est située dans la boîte mobile,
   ∘ une troisième symbologie lorsque la position actuelle est située dans la boîte mobile et lorsque la localisation prédictive n'est pas située dans la boîte mobile,
   ∘ une quatrième symbologie lorsque la position actuelle et la localisation prédictive sont situées dans la boîte mobile.

La boîte mobile permet de fournir des informations à un pilote sur la situation à venir à court terme.

Ces informations d'alerte sur le risque potentiel d'interférence entre la trajectoire de l'aéronef et la trajectoire de l'obstacle mobile peuvent tenir compte soit de la vitesse courante de l'aéronef soit des consignes de vitesses suivies par défaut par l'aéronef le long de la trajectoire prédite d'approche.

On rappelle que chaque objet est schématisé sur l'écran de visualisation à l'aide des identifiants visuels suivants : un plot, une indication du sens de déplacement de l'objet et une représentation relative au niveau de dangerosité de l'objet par le biais de coloration du plot par exemple, voire aussi une indication d'une position prédictive de l'objet à l'issue d'un temps donné. Cette indication du sens de déplacement peut être une flèche dont la longueur dépend de la vitesse de déplacement de l'objet, la flèche pouvant aboutir à une position prédictive de l'objet à l'issue d'un temps donné prédéterminé par le constructeur.

Les symbologies précitées peuvent comprendre des identifiants d'un autre type, ou encore peuvent consister à modifier au moins un de ces identifiants.

Par exemple, la première symbologie peut ne pas modifier lesdits identifiants. Par contre, la deuxième symbologie peut faire clignoter ladite flèche, le troisième symbologie peut faire clignoter un plot, et la quatrième symbologie peut faire clignoter le plot et la flèche représentant un objet.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un aéronef mettant en oeuvre le procédé selon l'invention,
- la figure 2, un schéma explicitant la phase de sécurisation lorsque l'aéronef n'a pas atteint le point d'approche finale,
- la figure 3, un schéma explicitant la phase de sécurisation lorsque l'aéronef a atteint le point d'approche finale,
- la figure 4, un schéma explicitant la phase de consolidation,
- la figure 5, un schéma présentant la boîte mobile affichée, et
- la figure 6 une représentation verticale de la trajectoire suivie.

Les éléments présents dans plusieurs figures distinctes sont affectés d'une seule et même référence.

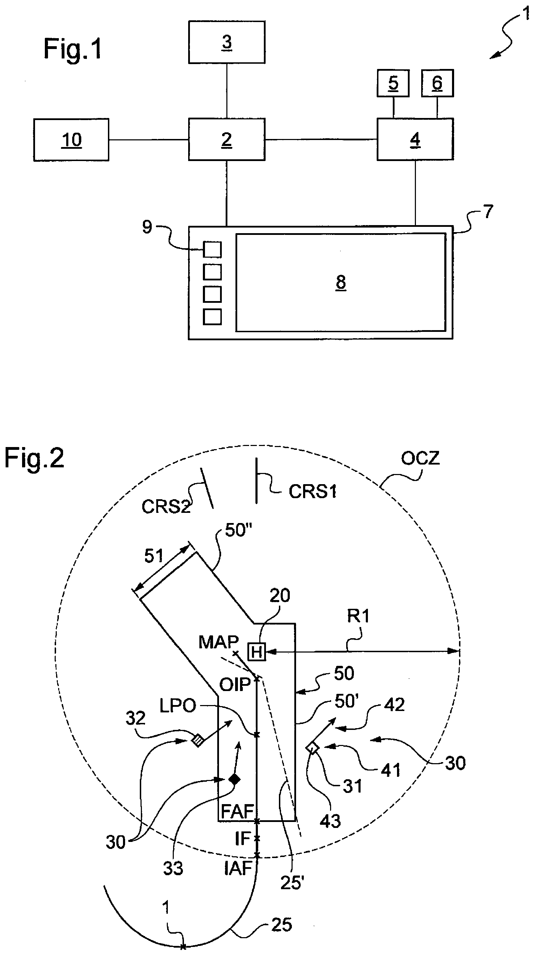

La figure 1 présente un aéronef 1 apte à mettre en oeuvre le procédé selon l'invention.

Cet aéronef peut comprendre un calculateur de navigation 2, tel qu'un calculateur connu usuellement sous l'acronyme « FMS » et l'expression anglaise « Flight Management System ».

Ce calculateur de navigation 2 peut communiquer avec une base de données 3 répertoriant des plateformes et certaines caractéristiques de ces plateformes.

De plus, le calculateur de navigation est en communication avec un dispositif de guidage automatique 10 apte à guider l'aéronef le long d'une trajectoire d'approche élaborée par le calculateur de navigation.

Ce calculateur de navigation peut générer une trajectoire d'approche pour se rendre sur une cible et notamment une plateforme flottant sur une surface liquide, et peut transmettre des instructions au dispositif de guidage automatique pour que l'aéronef soit guidé sur cette trajectoire d'approche.

Par ailleurs, l'aéronef 1 est muni d'un calculateur cartographique, tel qu'un calculateur connu sous l'acronyme « DMAP » ou l'expression anglaise « Digital Map ».

Le calculateur cartographique 4 est relié à système automatique d'identification 5 connu sous l'acronyme « AIS » ou l'expression anglaise « Automatique Identification System ». Le système automatique d'identification 5 peut recevoir des signaux AIS provenant d'objets équipés d'un système similaire. Ces signaux AIS peuvent fournir la latitude et la longitude courantes de l'objet, sa vitesse de déplacement, son sens de déplacement, sa hauteur, son tirant d'eau...

Le calculateur cartographique 4 peut être relié à un système automatique d'identification 5 connu sous l'acronyme « TCAS » ou l'expression anglaise « Trafic Collision Avoidance System ». Le système automatique d'identification peut recevoir des signaux TCAS provenant d'autres aéronefs équipés d'un système similaire. Ces signaux TCAS peuvent fournir la distance entre l'aéronef et l'aéronef intrus, ainsi que les informations suivantes relatives à l'aéronef intrus : l'altitude, la vitesse verticale, la course relative, la latitude et la longitude courantes , et la vitesse de déplacement.

On comprend que l'aéronef peut comprendre un système automatique d'identification 5 utilisant la technologie AIS et/ou la technologie TCAS notamment.

De plus, le calculateur cartographique 4 peut communiquer avec un système radar 6 de manière à recevoir des échos provenant de radars et dénommé usuellement « échos radars ».

Le calculateur cartographique 4 est à même de générer des affichages présentant notamment les échos radars reçus et les objets repérés par le système automatique d'indentification 5.

Le calculateur de navigation 2 et le calculateur cartographique 4 sont en communication avec un dispositif de visualisation 7. Le dispositif de visualisation est muni d'un écran de visualisation et de boutons 9 ou équivalents manoeuvrables par un opérateur. A l'aide de ces boutons 9, un opérateur peut transmettre des instructions ou informations au calculateur de navigation 2 et au calculateur cartographique 4.

D'autres architectures sont envisageables. Par exemple, les systèmes automatiques d'identification peuvent être interfacés directement avec le calculateur de navigation 2, ou encore avec le dispositif de visualisation 7.

En référence à la figure 2 et durant une phase d'élaboration, un opérateur manipule les boutons 9 pour permettre au calculateur de navigation d'élaborer une trajectoire d'approche 25.

Par exemple, l'opérateur choisit la plateforme cible à atteindre parmi les plateformes mémorisées dans la base de données 3, une course CRS1 à suivre pour atteindre la plateforme 20 cible, une grandeur de hauteur relative à une altitude minimale de décision pour une descente en approche finale vers ladite plateforme cible telle qu'une altitude minimale de descente (MDA) à atteindre pour une mise en palier suite à la phase de descente finale, un côté de décalage pour déterminer où doit se trouver la plateforme 20 par rapport à l'aéronef à un point de décision MAP.

La calculateur de navigation élabore alors une trajectoire d'approche 25 à suivre pour rejoindre la plateforme cible en fonction des attributs de la plateforme présents dans la base de données 3, et des informations paramétrées. Cette trajectoire d'approche 25 est affichée sur l'écran de visualisation en complément des informations affichées suite aux instructions du calculateur cartographique.

La trajectoire d'approche peut notamment comprendre un point d'approche initiale IAF, un point d'approche finale FAF, un point de décalage OIP et d'un point de décision MAP en fonction desdites informations et desdits attributs.

Eventuellement, un point d'approche intermédiaire IF et un point de palier LPO sont aussi déterminés.

Le point d'approche initiale IAF, le point d'approche finale FAF, le point de décalage OIP, les coordonnées de la plateforme cible, et le cas échéant le point d'approche intermédiaire IF et le point de palier LPO sont agencés dans un même plan vertical. Ce plan vertical est dirigé selon la course CRS1 paramétrée.

Par contre, le point de décision MAP est décalé par rapport à ce plan vertical. On rappelle que le décalage vers la gauche ou vers la droite du point de décision par rapport au plan vertical est éventuellement paramétrable.

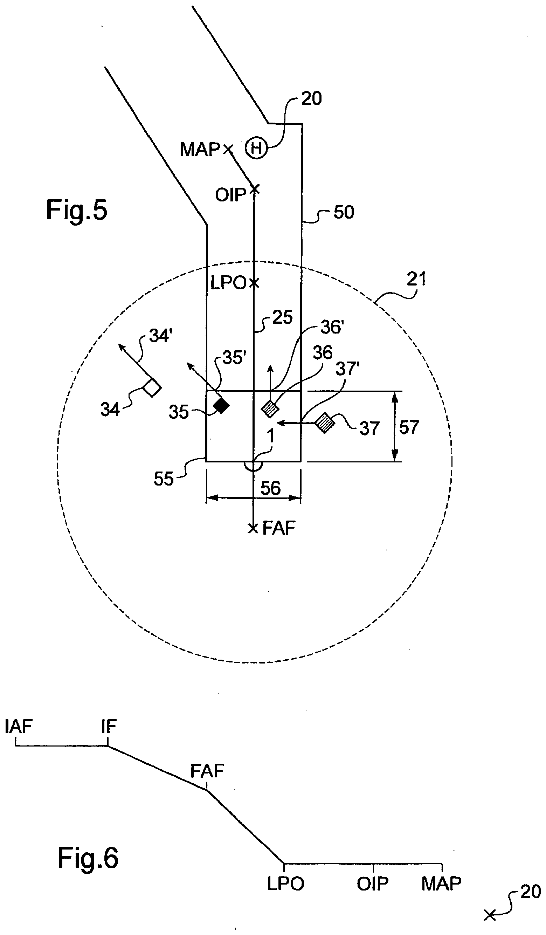

Selon la figure 6, le point de décision MAP, le point de décalage OIP, et le cas échéant le point de palier LPO sont disposés à une altitude égale à l'altitude minimale de décision MDA.

On comprend que l'invention s'applique toutefois à d'autres types de trajectoires d'approche.

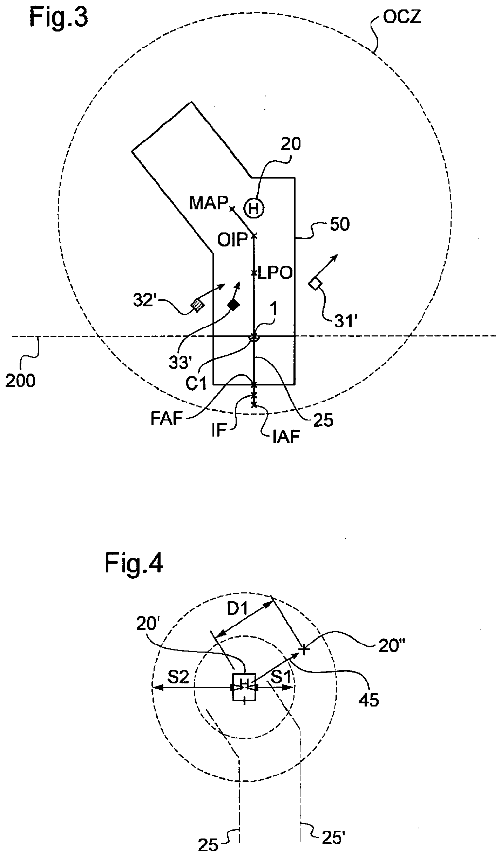

En référence à la figure 4, le calculateur cartographique peut alors mettre en oeuvre une phase de consolidation.

Ainsi, on détermine la position courante 20" de la plateforme 20 à l'aide par exemple du calculateur cartographique 4.

Par exemple, ce calculateur cartographique 4 utilise les signaux provenant du système automatique d'identification 5 ou du système radar 6.

Cette étape peut être réalisée à un endroit prédéterminé par rapport à la position théorique 20' de la plateforme cible, ou encore dès réception d'une information fournissant la position courante 20" tel qu'un signal AIS provenant de la plateforme 20.

Dès lors, on détermine la distance D1 séparant la position théorique 20' de la position courante 20" et on déclenche une alerte visuelle et/ou sonore lorsque cette distance D1 est supérieure à un premier seuil S1. Ces étapes peuvent être entreprises par le calculateur cartographique, l'alerte étant générée par exemple par le dispositif de visualisation 7.

Si la distance D1 est inférieure au deuxième seuil S2, on autorise la modification manuelle de la position de plateforme 20.

Par exemple, un opérateur utilise un bouton 9 pour pointer un lieu géométrique sur l'écran de visualisation afin de signaler au calculateur de navigation la nouvelle position de la plateforme à prendre en compte.

Selon le procédé, on détermine automatiquement un vecteur 45 reliant la position théorique 20' à la nouvelle position 20". Dès lors, on décale automatiquement la trajectoire d'approche 25 en lui appliquant ledit vecteur 45 pour définir une nouvelle trajectoire d'approche 25'. Par exemple, le calculateur cartographique transmet la nouvelle position théorique au calculateur de navigation qui calcule le vecteur à appliquer et élabore ainsi la nouvelle trajectoire.

En référence à la figure 2, on affiche sur l'écran de visualisation une représentation horizontale de la trajectoire d'approche à suivre. Il est à noter que l'on peut aussi afficher une trajectoire d'approche alternative 25' en cours d'élaboration. Deux trajectoires distinctes sont représentées de manière différente pour faciliter leur visualisation.

L'écran de visualisation 8 peut aussi afficher une représentation verticale du type de la figure 6.

En référence à la figure 2, on note par exemple que le calculateur cartographique peut requérir en complément l'affichage d'un couloir d'approche 50 d'une largeur 51 donnée. Le couloir d'approche 50 est centré sur la trajectoire d'approche 25 à suivre. Ce couloir d'approche peut correspondre au couloir défini par des règlements de certification

Le couloir d'approche peut éventuellement avoir des dimensions supérieures aux dimensions requises par les règlements au moins localement par sécurité. Par exemple, le couloir d'approche peut comprendre un segment droit 50' du point d'approche finale FAF au point de décalage OIP, puis un segment incliné 50" à partir de ce point de décalage OIP. Toutefois, le segment droit 50' peut aussi être prolongé au-delà du point de décalage OIP.

En complément ou de manière alternative, on met en oeuvre une phase de sécurisation de la trajectoire d'approche 25.

Dès lors, on détermine selon une fréquence d'échantillonnage la position actuelle ainsi que la direction de déplacement et la vitesse de déplacement de certains objets 30 situés sur la surface liquide ou en l'air. Plus précisément le calculateur cartographique 4 coopère avec le système automatique d'identification 5 pour répertorier les objets 30 munis d'un système automatique d'identification AIS, TCAS et présents dans une zone de surveillance OCZ prédéterminée.

La zone de surveillance OCZ représentée sur la figure 2 est un cercle d'un rayon R1 centré sur la plateforme 20 à atteindre.

Dès lors, on détermine un niveau de dangerosité de chaque objet par rapport à la trajectoire d'approche suivie selon des règles définies par le constructeur.

Ensuite, on affiche sur l'écran de visualisation 8 la représentation horizontale de la trajectoire d'approche 25 ainsi que pour chaque objet : un plot 41 représentant la position actuelle de l'objet, une indication 42 du sens de déplacement de l'objet, et une représentation 43 relative au niveau de dangerosité de l'objet. L'indication 42 peut être une flèche dirigée selon le vecteur vitesse de l'objet et ayant une longueur dépendant de la vitesse d'avancement de l'objet. Cette longueur peut aussi prendre en considération un temps donné, la flèche pouvant ainsi indiquer la position prédictive de l'objet à l'issue de ce temps donné.

Le niveau de dangerosité peut être établi par le calculateur cartographique qui communique au dispositif de visualisation 7 les données à afficher et leur symbologie avec génération éventuelle d'une alerte audio en fonction de la dangerosité.

Le constructeur peut établir trois niveaux de dangerosité affiché au travers d'une coloration des plots 41. Un premier niveau de dangerosité peut induire un premier type de coloration représenté par exemple par une couleur blanche sur le plot 31 de la figure 2. Un deuxième niveau de dangerosité peut induire un deuxième type de coloration représenté par un des hachures sur le plot 32 de la figure 2. Enfin, un troisième niveau de dangerosité peut induire un troisième type de coloration représenté par une couleur noire sur le plot 33 de la figure 2. Sur un aéronef et à titre d'exemple, le deuxième type de coloration peut être une couleur ambre, le troisième type de coloration pouvant être une coloration rouge.

En fonction de la dangerosité des objets pris en considération, on peut autoriser une élaboration d'une trajectoire d'approche alternative 25' visant à éviter des objets jugés dangereux. Ainsi, on peut autoriser un changement de cap pour passer d'une trajectoire d'approche alignée sur une première course CRS1 vers une trajectoire d'approche alternative alignée sur une deuxième course CRS2.

Durant la phase de sécurisation, on distingue deux situations distinctes, en fonction de la position de l'aéronef par rapport au point d'approche finale FAF.

Avant que ce point d'approche finale FAF soit atteint, on détermine le temps TFAF à l'issue duquel l'aéronef va atteindre le point d'approche finale FAF. Cette étape peut être entreprise par le calculateur cartographique par exemple. A cet effet, le calculateur cartographique peut être relié à des dispositifs de détermination de la vitesse sol de l'aéronef.

Dès lors, le calculateur cartographique détermine la position prédictive de chaque objet étudié à l'issue de ce temps TFAF. Ainsi l'aéronef détermine où seront les objets lorsque cet aéronef atteindra le point d'approche finale en fonction des informations transmises par leur système automatique d'identification.

Dès lors, le niveau de dangerosité de chaque objet est établi en fonction de sa position prédictive et de sa position actuelle par rapport au couloir d'approche.

Le calculateur cartographique peut ainsi conférer à un objet le premier niveau de dangerosité lorsque la position actuelle de cet objet n'est pas située dans le couloir d'approche 50 et lorsque sa position prédictive ne sera pas située dans le couloir d'approche 50 au temps TFAF. L'objet marqué par le plot 31 présente ainsi ce premier niveau de dangerosité.

Le deuxième niveau de dangerosité correspond à un objet ayant une position actuelle en dehors du couloir d'approche 50, mais qui possède une position prédictive située dans ce couloir d'approche 50. L'objet marqué par le plot 32 présente ainsi ce deuxième niveau de dangerosité.

Enfin, le troisième niveau de dangerosité est associé à un objet lorsque sa position actuelle et sa position prédictive sont situées dans le couloir d'approche 50. Le plot 33 correspond à la position actuelle d'un tel objet.

En référence à la figure 3, le système se focalise sur les objets potentiellement situés devant l'aéronef lorsque le point d'approche finale FAF est atteint ou dépassé, à savoir les objets situés entre la ligne 200 et le haut de la feuille sur laquelle se trouve la figure 3.

Par conséquent, on détermine au fil du temps la position actuelle ainsi que la direction de déplacement et la vitesse de déplacement des objets dénommés « intrus » par commodité situés soit devant l'aéronef 1, soit dans un cercle C1 centré sur l'aéronef 1. Le diamètre de cercle est restreint et inférieur à la largeur d'un couloir d'approche.

Pour chaque intrus et au fil du temps, on détermine selon une fréquence de traitement si l'intrus est à un instant courant situé dans un couloir d'approche 50 et si cet intrus est situé devant l'aéronef 1. Si l'intrus n'est pas présent dans le couloir d'approche 50 et si ledit intrus est situé devant l'aéronef 1, on détermine si l'intrus va entrer dans ledit couloir d'approche 50 dans le futur, et dans l'affirmative quand cet intrus entrera dans le couloir d'approche 50.

Ces étapes peuvent être entreprises par le calculateur cartographique.

Dès lors, on confère à un intrus le premier niveau de dangerosité représenté par une première représentation 31' sur l'écran de visualisation 8 lorsque l'intrus est derrière l'aéronef 1 à un instant courant, ou lorsque l'intrus sera derrière l'aéronef lorsqu'il entrera dans le couloir d'approche 50, ou encore lorsque l'intrus n'entrera jamais dans le couloir d'approche.

L'intrus est par contre associé au deuxième niveau de dangerosité représenté par une deuxième représentation 32' sur l'écran de visualisation 8 lorsque l'intrus sera devant l'aéronef 1 quand il entrera dans le couloir d'approche 50.

Enfin, on associe l'intrus à un troisième niveau de dangerosité représenté par une troisième représentation 33' sur l'écran de visualisation 8 lorsque l'intrus est devant l'aéronef 1 dans le couloir d'approche 50 à l'instant courant.

Par ailleurs et en référence à la figure 5, on peut afficher sur requête et sur l'écran de visualisation 8 une boîte mobile 55. Cette boîte mobile correspond sur la représentation horizontale à un quadrilatère d'une largeur fixe 56 prédéterminée et d'une longueur 57 égale au produit d'une constante de temps CTE et de la vitesse sol GS de l'aéronef 1. La constante de temps peut être par exemple choisie dans une liste prédéterminée par le constructeur.

La boîte mobile 55 est centrée transversalement sur le vecteur vitesse de l'aéronef et s'étend longitudinalement le long de ce vecteur vitesse à partir d'une représentation de l'aéronef 1. La boîte mobile se déplace donc conjointement avec la représentation de l'aéronef sur l'écran de visualisation.

Lorsque cette option est activée, on associe certains objets à une symbologie supplémentaire. Plus particulièrement, on détermine au fil du temps la position actuelle ainsi que la direction de déplacement, la vitesse de déplacement et la localisation prédictive à l'issue de ladite constante de temps des objets dénommés « élément rapproché » munis d'un système automatique d'identification qui sont présents dans une zone de balayage Z1 prédéterminée centrée sur l'aéronef,

Pour chaque élément rapproché, on affiche :
- une première symbologie lorsque la position actuelle et la localisation prédictive ne sont pas situées dans la boîte mobile 55,
- une deuxième symbologie lorsque la position actuelle n'est pas située dans la boîte mobile 55 et lorsque la localisation prédictive est située dans la boîte mobile 55,
- une troisième symbologie lorsque la position actuelle est située dans la boîte mobile 55 et lorsque la localisation prédictive n'est pas située dans la boîte mobile 55,
- une quatrième symbologie lorsque la position actuelle et la localisation prédictive sont situées dans la boîte mobile 55.

Ainsi, le plot 34 et la flèche 34' associée demeurent inchangés selon la première symbologie.

Par contre, la flèche 37' associée au plot 37 peut clignoter selon la deuxième symbologie.

De plus, le plot 35 peut clignoter selon la troisième symbologie, la flèche 36' et le plot 36 clignotant tous deux selon la quatrième symbologie.

Le cadre de la boîte mobile peut aussi présenter une particularité lorsque le plot présentant la position courante d'un objet est présent dans cette boîte mobile. Par exemple, le cadre peut alors devenir rouge.

## Revendications

1. Procédé pour faciliter l'approche d'une plateforme (20) présente sur une surface liquide avec un aéronef (1), le procédé comprenant une phase d'élaboration pour élaborer une trajectoire d'approche (25) vers une plateforme, le procédé comprenant:
- durant ladite phase d'élaboration, ladite trajectoire d'approche (25) est élaborée pour approcher d'une position théorique (20') de ladite plateforme (20), ladite position théorique étant saisie par un opérateur ou provenant d'une base de données de plateformes,
- durant une phase de consolidation de ladite trajectoire d'approche (25) :
∘ on détermine la position courante (20") de ladite plateforme (20),
∘ on détermine une distance (D1) séparant ladite position théorique (20') de ladite position courante (20"),
∘ on déclenche une alerte lorsque ladite distance (D1) est supérieure à un premier seuil (S1),
le procédé étant **caractérise en ce que** durant ladite phase de consolidation de ladite trajectoire d'approche (25) on détermine automatiquement un vecteur (45) reliant la position théorique (20') de la plateforme à une nouvelle position (20") cible, et on décale automatiquement ladite trajectoire d'approche (25) en lui appliquant ledit vecteur (45) pour rallier ladite nouvelle position (20").

2. Procédé selon la revendication 1,
**caractérisé en ce qu'**on débute la phase de consolidation dès la réception d'une information fournissant la position courante de la plateforme.

3. Procédé selon l'une quelconque des revendications 1 à 2,
**caractérisé en ce qu'**on affiche sur ledit écran de visualisation (8) un couloir d'approche (50) d'une largeur (51) donnée centré sur ladite trajectoire d'approche (25).

4. Procédé selon l'une quelconque des revendications 1 à 3,
**caractérisé en ce que** durant une phase de sécurisation de ladite trajectoire d'approche (25) :
∘ on détermine au fil du temps la position actuelle ainsi que la direction de déplacement et la vitesse de déplacement des objets (30) munis d'un système automatique d'identification qui sont présents dans une zone de surveillance (OCZ) prédéterminée,
∘ on détermine un niveau de dangerosité de chaque objet par rapport à ladite trajectoire d'approche suivie qui est suivie par ledit aéronef,
∘ on affiche sur un écran de visualisation (8) une représentation horizontale de ladite trajectoire d'approche (25), ainsi que pour chaque objet : un plot (41) représentant la position actuelle de l'objet, une indication (42) du sens de déplacement de l'objet et une représentation (43) relative au niveau de dangerosité de l'objet.

5. Procédé selon la revendication 4,
**caractérisé en ce que** ladite zone de surveillance (OCZ) prédéterminée est un cercle d'un rayon (R1) défini par le constructeur centré sur la plateforme à atteindre.

6. Procédé selon la revendication 4,
**caractérisé en ce que** durant la phase de sécurisation, la trajectoire d'approche (25) passant par un point d'approche finale (FAF), avant que ce point d'approche finale (FAF) soit atteint par l'aéronef :
- on détermine le temps (TFAF) nécessaire audit aéronef pour atteindre ce point d'approche finale (FAF),
- on détermine la position prédictive qu'aura chacun desdits objets lorsque ledit aéronef aura atteint le point d'approche finale,
- on détermine le niveau de dangerosité de chaque objet en fonction de sa position prédictive et de sa position actuelle par rapport à un couloir d'approche (50) d'une largeur (51) donnée centré sur ladite trajectoire d'approche (25).

7. Procédé selon la revendication 6,
**caractérisé en ce qu'**on met en oeuvre un premier, un deuxième et un troisième niveaux de dangerosité, un objet étant associé :
- au premier niveau de dangerosité lorsque la position actuelle de cet objet n'est pas située dans ledit couloir d'approche (50) et lorsque sa position prédictive ne sera pas située dans ledit couloir d'approche (50) lorsque ledit aéronef (1) aura atteint le point d'approche finale (FAF),
- au deuxième niveau de dangerosité lorsque la position actuelle de cet objet n'est pas située dans ledit couloir d'approche (50) et lorsque sa position prédictive sera située dans ledit couloir d'approche (50) lorsque ledit aéronef (1) aura atteint le point d'approche finale (FAF),
- au troisième niveau de dangerosité lorsque la position actuelle de cet objet est située dans ledit couloir d'approche (50) et lorsque sa position prédictive sera située dans ledit couloir d'approche (50) lorsque ledit aéronef (1) aura atteint le point d'approche finale (FAF).

8. Procédé selon l'une quelconque des revendications 4 à 7,
**caractérisé en ce qu'**on autorise un changement de course (CRS1, CRS2) de ladite trajectoire d'approche (25) lors d'une phase d'élaboration d'une trajectoire d'approche alternative (25').

9. Procédé selon la revendication 8
**caractérisé en ce qu'**on affiche la trajectoire d'approche (25) élaborée en premier lieu et la trajectoire d'approche alternative (25') sur l'écran de visualisation (8) avec des représentations distinctes.

10. Procédé selon l'une quelconque des revendications 4 à 9,
**caractérisé en ce que** durant la phase de sécurisation, la trajectoire d'approche passant par un point d'approche finale (FAF), après que ce point d'approche finale (FAF) soit atteint :
- on détermine au fil du temps la position actuelle ainsi que la direction de déplacement et la vitesse de déplacement des objets dénommés « intrus » situés devant ledit aéronef (1) ou dans un cercle (C1) centré sur ledit aéronef (1) et présentant un diamètre prédéterminé,
- pour chaque intrus et au fil du temps :
∘ on détermine si ledit intrus est à un instant courant situé dans un couloir d'approche (50) entourant ladite trajectoire d'approche et si ledit intrus est situé devant l'aéronef (1),
∘ si ledit intrus n'est pas présent dans le couloir d'approche (50) et si ledit intrus est situé devant l'aéronef (1), on détermine si l'intrus va entrer dans ledit couloir d'approche (50) dans le futur, et dans l'affirmative quand ledit intrus entrera dans le couloir d'approche (50),
∘ on associe ledit intrus à un premier niveau de dangerosité représenté par une première représentation sur l'écran de visualisation (8) lorsque ledit intrus est derrière l'aéronef (1) à un instant courant ou lorsque ledit intrus sera derrière l'aéronef lorsqu'il entrera dans ledit couloir d'approche (50),
∘ on associe ledit intrus à un deuxième niveau de dangerosité représenté par une deuxième représentation sur l'écran de visualisation (8) lorsque ledit intrus sera devant l'aéronef (1) quand il entrera dans ledit couloir d'approche (50),
∘ on associe ledit intrus à un troisième niveau de dangerosité représenté par une troisième représentation sur l'écran de visualisation (8) lorsque ledit intrus est devant l'aéronef (1) dans ledit couloir d'approche (50) à l'instant courant.

11. Procédé selon l'une quelconque des revendications 4 à 10,
**caractérisé en ce que** :
- on affiche sur l'écran de visualisation (8) une boîte mobile (55) représentant un quadrilatère d'une largeur fixe (56) prédéterminée et d'une longueur (57) égale au produit d'une constante de temps (CTE) et de la vitesse sol (GS) de l'aéronef (1), la boîte mobile (55) étant centrée transversalement sur le vecteur vitesse de l'aéronef et s'étendant longitudinalement à partir d'une représentation de l'aéronef (1),
- on détermine au fil du temps la position actuelle ainsi que la direction de déplacement la vitesse de déplacement et la localisation prédictive à l'issue de ladite constante de temps des objets dénommés « élément rapproché » situés sur ladite surface liquide munis d'un système automatique d'identification qui sont présents dans une zone de balayage prédéterminée centrée sur ledit aéronef,
- on affiche sur l'écran de visualisation (8) pour chaque élément rapproché :
∘ une première symbologie lorsque la position actuelle et la localisation prédictive ne sont situées dans la boîte mobile (55),
∘ une deuxième symbologie lorsque la position actuelle n'est pas située dans la boîte mobile (55) et lorsque la localisation prédictive est située dans la boîte mobile (55),
∘ une troisième symbologie lorsque la position actuelle est située dans la boîte mobile (55) et lorsque la localisation prédictive n'est pas située dans la boîte mobile (55),
∘ une quatrième symbologie lorsque la position actuelle et la localisation prédictive sont situées dans la boîte mobile (55).

## Patentansprüche

1. Verfahren zur Erleichterung der Annäherung an eine Plattform (20) auf einer Flüssigkeitsoberfläche mit einem Luftfahrzeug (1), wobei das Verfahren eine Erstellungsphase aufweist zum Erstellen einer Flugbahn (25) zur Annäherung an eine Plattform, wobei das Verfahren aufweist:
- während der Erstellungsphase wird die Annäherungsflugbahn (25) erstellt, um sich einer theoretischen Lage (20') der Plattform (20) zu nähern, wobei die theoretische Lage durch eine Bedienungsperson erfasst wird oder aus einer Datenbank für Plattformen stammt,
- während einer Konsolidierungsphase der Annäherungsflugbahn (25):
∘ die aktuelle Lage (20") der Plattform (20) bestimmt wird,
∘ ein Abstand (D1), der die theoretische Lage (20') von der aktuellen Lage (20") trennt, bestimmt wird,
∘ ein Alarm ausgelöst wird, wenn der Abstand (D1) größer als ein erster Schwellenwert (S1) ist,
**dadurch gekennzeichnet, dass** während der Konsolidierungsphase der Annäherungsflugbahn (25) automatisch ein Vektor (45) bestimmt wird, der die theoretische Lage (20') der Plattform mit einer neuen anvisierten Lage (20") verbindet, und die Annäherungsflugbahn (25) automatisch verschoben wird durch Anwendung des Vektors (45), um die neue Lage (20") zu erlangen.

2. Verfahren nach Anspruch 1,
**dadurch gekennzeichnet, dass** die Konsolidierungsphase begonnen wird, sobald eine Information empfangen wird, die die aktuelle Lage der Plattform liefert.

3. Verfahren nach einem der Ansprüche 1 bis 3,
**dadurch gekennzeichnet, dass** auf dem Anzeigebildschirm (8) ein Annäherungskorridor (50) mit einer gegebenen Breite (51), der auf der Annäherungsflugbahn (25) zentriert ist, angezeigt wird.

4. Verfahren nach einem der Ansprüche 1 bis 3,
**dadurch gekennzeichnet, dass**, während einer Sicherungsphase der Annäherungsflugbahn (25):
∘ im Laufe der Zeit die aktuelle Lage sowie die Bewegungsrichtung und die Bewegungsgeschwindigkeit von Objekten (30) bestimmt werden, die mit einem automatischen Identifizierungssystem versehen sind, die in einem vorbestimmten Überwachungsbereich (OCZ) vorhanden sind,
∘ ein Gefährlichkeitsgrad eines jeden Objektes bezüglich der gefolgten Annäherungflugbahn, die von dem Luftfahrzeug verfolgt wird, bestimmt wird,
∘ auf einem Anzeigebildschirm (8) eine horizontale Darstellung der Annäherungsflugbahn (25) sowie für jedes Objekt eine graphische Darstellung (41), die die aktuelle Lage des Objektes darstellt, eine Anzeige (42) der Bewegungsrichtung des Objekts und eine Darstellung (43) bezüglich des Gefährlichkeitsgrads des Objekts angezeigt werden.

5. Verfahren nach Anspruch 4,
**dadurch gekennzeichnet, dass** der vorbestimmte Überwachungsbereich (OCZ) ein Kreis mit einem Radius (R1) ist, der von dem Hersteller definiert wird und auf der zu erreichenden Plattform zentriert ist.

6. Verfahren nach Anspruch 4,
**dadurch gekennzeichnet, dass** während der Sicherungsphase, wobei die Annäherungsflugbahn (25) durch einen finalen Annäherungspunkt (FAF) verläuft, bevor dieser finale Annäherungspunkt (FAF) von dem Luftfahrzeug erreicht wird:
- die Zeitdauer (TFAF) bestimmt wird, die für das Luftfahrzeug notwendig ist, um den finalen Annäherungspunkt (FAF) zu erreichen,
- die prognostizierte Lage, die jedes der Objekte einnehmen wird, wenn das Luftfahrzeug den finalen Annäherungspunkt erreicht hat, bestimmt wird,
- der Gefährlichkeitsgrad eines jeden Objektes in Abhängigkeit von seiner prognostizierten Lage und von seiner aktuellen Lage relativ zu einem Annäherungskorridor (50) einer gegebenen Breite (51), der auf der Annäherungsflugbahn (25) zentriert ist, bestimmt wird.

7. Verfahren nach Anspruch 6,
**dadurch gekennzeichnet, dass** ein erster, ein zweiter und ein dritter Gefährlichkeitsgrad eingesetzt werden, wobei ein Objekt verbunden wird mit:
- dem ersten Gefährlichkeitsgrad, wenn die aktuelle Lage dieses Objektes nicht in dem Annäherungskorridor (50) liegt und wenn seine prognostizierte Lage nicht in dem Annäherungskorridor (50) liegen wird, wenn das Luftfahrzeug (1) seinen finalen Annäherungspunkt (FAF) erreicht hat,
- dem zweiten Gefährlichkeitsgrad, wenn die aktuelle Lage dieses Objekts nicht in dem Annäherungskorridor (50) liegt und wenn seine prognostizierte Lage in dem Annäherungskorridor (50) liegen wird, wenn das Luftfahrzeug (1) seinen finalen Annäherungspunkt (FAF) erreicht hat,
- dem dritten Gefährlichkeitsgrad, wenn die aktuelle Lage dieses Objekts in dem Annäherungskorridor (50) liegt und wenn seine prognostizierte Lage in dem Annäherungskorridor (50) liegen wird, wenn das Luftfahrzeug (1) den finalen Annäherungspunkt (FAF) erreicht hat.

8. Verfahren nach einem der Ansprüche 4 bis 7,
**dadurch gekennzeichnet, dass** eine Änderung des Kurses (CRS1, CRS2) der Annäherungsflugbahn (25) während einer Phase der Erstellung einer alternativen Annäherungsflugbahn (25') erlaubt wird.

9. Verfahren nach Anspruch 8,
**dadurch gekennzeichnet, dass** in erster Linie die erstellte Annäherungsflugbahn (25) und die alternative Annäherungsflugbahn (25') auf dem Anzeigebildschirm (8) mit verschiedenen Darstellungen angezeigt werden.

10. Verfahren nach einem der Ansprüche 4 bis 9,
**dadurch gekennzeichnet, dass**, während der Sicherungsphase, wobei die Annäherungsflugbahn durch einen finalen Annäherungspunkt (FAF) verläuft, nachdem dieser finale Annäherungspunkt (FAF) erreicht ist:
- im Laufe der Zeit die aktuelle Lage sowie die Bewegungsrichtung und die Bewegungsgeschwindigkeit von "Eindringling" genannten Objekten bestimmt werden, die sich vor dem Luftfahrzeug (1) oder in einem Kreis (C1), der auf dem Luftfahrzeug (1) zentriert ist und einen vorbestimmten Durchmesser aufweist, befinden,
- für jeden Eindringling und im Laufe der Zeit:
∘ bestimmt wird, ob der Eindringling zu einem aktuellen Zeitpunkt in dem Annäherungskorridor (50), der die Annäherungsflugbahn umgibt, gelegen ist, und ob sich der Eindringling vor dem Luftfahrzeug (1) befindet,
∘ wenn der Eindringling sich nicht in dem Annäherungskorridor (50) befindet und wenn der Eindringling vor dem Luftfahrzeug (1) gelegen ist, bestimmt wird, ob der Eindringling in Zukunft in den Annäherungskorridor (50) eintreten wird, und falls dies zutrifft, wann der Eindringling in den Annäherungskorridor (50) eintreten wird,
∘ der Eindringling mit einem ersten Gefährlichkeitsgrad verbunden wird, der durch eine erste Darstellung auf dem Anzeigebildschirm (8) dargestellt wird, wenn sich der Eindringling zu einem aktuellen Zeitpunkt hinter dem Luftfahrzeug (1) befindet oder wenn der Eindringling hinter dem Luftfahrzeug sein wird, wenn er in den Annäherungskorridor (50) eintreten wird,
∘ der Eindringling mit einem zweiten Gefährlichkeitsgrad verbunden wird, der durch eine zweite Darstellung auf dem Anzeigebildschirm (8) dargestellt wird, wenn sich der Eindringling vor dem Luftfahrzeug (1) befinden wird, wenn dieser in den Annäherungskorridor (50) eintreten wird,
∘ der Eindringling mit einem dritten Gefährlichkeitsgrad verbunden wird, der durch eine dritte Darstellung auf dem Anzeigebildschirm (8) dargestellt wird, wenn sich der Eindringling zum aktuellen Zeitpunkt vor dem Luftfahrzeug (1) in dem Annäherungskorridor befindet.

11. Verfahren nach einem der Ansprüche 4 bis 10,
**dadurch gekennzeichnet, dass**:
- auf dem Anzeigebildschirm (8) eine bewegliche Box (55) angezeigt wird, die ein Viereck mit einer vorbestimmten festen Breite (56) und einer Länge (57) darstellt, die gleich dem Produkt aus einer Zeitkonstante (CTE) und der Geschwindigkeit über Grund (GS) des Luftfahrzeugs (1) ist, wobei die bewegliche Box (55) in Querrichtung auf dem Geschwindigkeitsvektor des Luftfahrzeugs zentriert ist und sich in Längsrichtung ausgehend von einer Darstellung des Luftfahrzeugs (1) erstreckt,
- im Laufe der Zeit die aktuelle Lage sowie die Bewegungsrichtung, die Bewegungsgeschwindigkeit und die prognostizierte Lage bei der Zeitkonstanten von Objekten, die "näher gekommene Elemente" genannt werden, die auf der Flüssigkeitsoberfläche liegen, und mit einem automatischen Identifizierungssystem versehen sind, und die in einem auf dem Luftfahrzeug zentrierten vorbestimmten Abtastbereich gelegen sind, bestimmt werden,
- auf dem Anzeigebildschirm (8) für jedes näher gekommene Element angezeigt wird:
∘ eine erste Symbologie, wenn die aktuelle Lage und die prognostizierte Lage nicht in der beweglichen Box (55) liegen,
∘ eine zweite Symbologie, wenn die aktuelle Lage nicht in der beweglichen Box (55) liegt und wenn die prognostizierte Lage in der beweglichen Box (55) liegt,
∘ eine dritte Symbologie, wenn die aktuelle Lage in der beweglichen Box (55) liegt und wenn die prognostizierte Lage nicht in der beweglichen Box (55) liegt,
∘ eine vierte Symbologie, wenn die aktuelle Lage und die prognostizierte Lage in der beweglichen Box (55) liegen.

## Claims

1. Method for facilitating the approach to a platform (20) present on a liquid surface with an aircraft (1), the method comprising a preparation phase for preparing an approach trajectory (25) to a platform,
the method comprising:
- during said preparation phase, said approach trajectory (25) is prepared for approaching a theoretical position (20') of said platform (20), said theoretical position being input by an operator or coming from a platform database,
- during a consolidation phase for consolidating said approach trajectory (25):
∘ the current position (20") of said platform (20) is determined,
∘ a distance (D1) separating said theoretical position (20') from said current position (20") is determined,
∘ an alert is triggered when said distance (D1) is greater than a first threshold (S1),
the method being **characterised in that** during said consolidation phase for consolidating said approach trajectory (25), a vector (45) connecting the theoretical position (20') of the platform to a new target position (20") is determined automatically, and said approach trajectory (25) is offset automatically by applying said vector (45) thereto in order to reach said new position (20").

2. Method according to claim 1,
**characterised in that** the consolidation phase is begun as soon as information giving the current position of the platform is received.

3. Method according to any one of claims 1 to 2, **characterised in that** an approach corridor (50) of a given width (51) centred on said approach trajectory (25) is displayed on said display screen (8).

4. Method according to any one of claims 1 to 3, **characterised in that** during a safety phase of said approach trajectory (25) :
∘ over time the current position as well as the direction of travel and the speed of travel of the objects (30) provided with an automatic identification system which are present in a predetermined monitoring zone (OCZ) are determined,
∘ a danger level of each object relative to said approach trajectory followed by said aircraft is determined,
∘ a horizontal representation of said approach trajectory (25) is displayed on a display screen (8), as well as for each object: a plot (41) representing the current position of the object, an indication (42) of the direction of travel of the object and a representation (43) relating to the danger level of the object.

5. Method according to claim 4,
**characterised in that** said predetermined monitoring zone (OCZ) is a circle of a radius (R1) defined by the manufacturer and centred on the platform to be reached.

6. Method according to claim 4,
**characterised in that** during the safety phase, the approach trajectory (25) passing through a final approach point (FAF), before this final approach point (FAF) is reached by the aircraft:
- the time (TFAF) needed for said aircraft to reach this final approach point (FAF) is determined,
- the predictive position which each of said objects will have when said aircraft will have reached the final approach point is determined,
- the danger level of each object as a function of its predictive position and of its current position relative to an approach corridor (50) of a given width (51) centred on said approach trajectory (25) is determined.

7. Method according to claim 6,
**characterised in that** a first, a second and a third danger level are used, an object being associated:
- with the first danger level when the current position of this object is not situated in said approach corridor (50) and when its predictive position will not be situated in said approach corridor (50) when said aircraft (1) will have reached the final approach point (FAF),
- with the second danger level when the current position of this object is not situated in said approach corridor (50) and when its predictive position will be situated in said approach corridor (50) when said aircraft (1) will have reached the final approach point (FAF),
- with the third danger level when the current position of this object is situated in said approach corridor (50) and when its predictive position will be situated in said approach corridor (50) when said aircraft (1) will have reached the final approach point (FAF).

8. Method according to any one of claims 4 to 7,
**characterised in that** a change of course (CRS1, CRS2) of said approach trajectory (25) is authorised during a phase of preparing an alternative approach trajectory (25').

9. Method according to claim 8,
**characterised in that** the approach trajectory (25) prepared first and the alternative approach trajectory (25') are displayed on the display screen (8) with distinct representations.

10. Method according to any one of claims 4 to 9,
**characterised in that** during the safety phase, the approach trajectory passing through a final approach point (FAF), after this final approach point (FAF) has been reached:
- over time the current position as well as the direction of travel and the speed of travel of the objects referred to as "intruders" situated ahead of said aircraft (1) or in a circle (C1) centred on said aircraft (1) and having a predetermined diameter are determined,
- for each intruder and over time:
∘ it is determined whether said intruder is at a current instant situated in an approach corridor (50) surrounding said approach trajectory and whether said intruder is situated ahead of the aircraft (1),
∘ if said intruder is not present in the approach corridor (50) and if said intruder is situated ahead of the aircraft (1), it is determined whether the intruder is going to enter said approach corridor (50) in the future, and if so when said intruder will enter the approach corridor (50),
∘ said intruder is associated with a first danger level represented by a first representation on the display screen (8) when said intruder is behind the aircraft (1) at a current instant or when said intruder will be behind the aircraft when it will enter said approach corridor (50),
∘ said intruder is associated with a second danger level represented by a second representation on the display screen (8) when said intruder is will be ahead of the aircraft (1) when it will enter said approach corridor (50),
o said intruder is associated with a third danger level represented by a third representation on the display screen (8) when said intruder is ahead of the aircraft (1) in said approach corridor (50) at the current instant.

11. Method according to any one of claims 4 to 10, **characterised in that**:
- a moving box (55) representing a quadrilateral of a predetermined fixed width (56) and of a length (57) equal to the product of a time constant (CTE) and the ground speed (GS) of the aircraft (1) is displayed on the display screen (8), the moving box (55) being centred transversely on the speed vector of the aircraft and extending longitudinally from a representation of the aircraft (1),
- over time there are determined the current position as well as the direction of travel, the speed of travel and the predictive location at the end of said time constant of the objects referred to as "near elements" situated on said liquid surface and provided with an automatic identification system which are present in a predetermined scan zone centred on said aircraft,
- for each near element there is displayed on the display screen (8):
∘ a first symbology when the current position and the predictive location are not situated in the moving box (55),
∘ a second symbology when the current position is not situated in the moving box (55) and when the predictive location is situated in the moving box (55),
∘ a third symbology when the current position is situated in the moving box (55) and when the predictive location is not situated in the moving box (55),
∘ a fourth symbology when the current position and the predictive location are situated in the moving box (55).
